Europäisches Patentamt

European Patent Office

Office européen des brevets

(19)

(11) Veröffentlichungsnummer: **0 130 501**
**B1**

(12) **EUROPÄISCHE PATENTSCHRIFT**

(45) Veröffentlichungstag der Patentschrift: 02.05.90

(51) Int. Cl.⁵: **B 60 T 8/32**

(21) Anmeldenummer: 84107172.3

(22) Anmeldetag: 22.06.84

(54) **Hydraulisches und/oder pneumatisches Bremssystem für Kraftfahrzeuge.**

(30) Priorität: 24.06.83 DE 3322786

(43) Veröffentlichungstag der Anmeldung:
09.01.85 Patentblatt 85/02

(45) Bekanntmachung des Hinweises auf die
Patenterteilung:
02.05.90 Patentblatt 90/18

(84) Benannte Vertragsstaaten:
DE FR GB IT

(56) Entgegenhaltungen:
GB-A-2 022 742
US-A-3 829 170

(73) Patentinhaber: **VOLKSWAGEN
AKTIENGESELLSCHAFT**
**D-3180 Wolfsburg (DE)**

(72) Erfinder: **Hattwig, Peter, Dipl.-Ing.**
**Sudetenstrasse 61**
**D-3302 Cremlingen (DE)**

EP 0 130 501 B1

**Beschreibung**

Die Erfindung bezieht sich auf ein hydraulisches und/oder pneumatisches Bremssystem für Kraftfahrzeuge der im Oberbegriff des Patentanspruchs 1 genannten Art. Ein solches, ein Antiblokkier-Regelsystem umfassendes Bremssystem für Kraftfahrzeuge ist beispielsweise aus der US-A 40 22 514 bekannt.

Im Vergleich zu anderen bekannten derartigen Bremssystemen ist der Aufwand für dieses bekannte Antiblockier-Brennssystem vergleichsweise gering, denn zur Modulation des Bremsdrucks der regelbaren Bremskreise ist bei ihm lediglich ein gemeinsamer, von einer elektronischen Auswerte- und Steuerschaltung gesteuerter Druckmodulator vorgesehen, durch welchen in Verbindung mit in den voneinander unabhängigen regelbaren Bremskreisen angeordneten Ventilvorrichtungen nach Art von Umschaltventilen je nach dem, ob an einem oder an beiden der drehgeschwindigkeits- oder drehverzögerungsüberwachten Hinterräder Blockiergefahr angezeigt wird, entweder für die eine oder für beide Hinterradbremsen der Bremsdruck durch Drucksenken, Druckhalten und Druckanheben so geregelt wird, daß das Blockieren dieser Räder verhindert wird. Der gemeinsame und einzige Druckmodulator und die in den beiden voneinander unabhängigen Bremskreisen liegenden Umschalt-Ventilvorrichtungen sind dabei so angeordnet und miteinander verknüpft, daß durch das Einschalten einer Umschalt-Ventilvorrichtung — durch die elektronische Auswerte- und Steuerschaltung — die hydraulische Verbindung von der zugeordneten Hinterradbremse zum Hauptbremszylinder der Bremsanlage unterbrochen und statt dessen eine druckmäßige Verbindung zum Druckmodulator hergestellt wird, so daß der Bremsdruck dieser Hinterradbremse durch den Druckmodulator — gesteuert durch die elektronische Auswerte- und Steuerschaltung — den Regelerfordernissen entsprechend bis zur Beseitigung der Blockiergefahr abgesenkt und danach wieder angehoben wird, wobei sich dieser Zyklus erforderlichenfalls auch unmittelbar hintereinander mehrmals wiederholen kann. Wenn für beide überwachten Räder Blockiergefahr signalisiert wird, werden durch Aktivierung beider Umschalt-Ventilvorrichtungen beide Hinterradbremsen vom Hauptbremszylinder getrennt und mit dem Druckmodulator verbunden. Je nach Erfordernis ist somit die eine oder die andere oder auch beide Hinterradbremsen mit dem Druckmodulator druckmäßig verbunden.

Der Druckmodulator selbst enthält eine Druckkammer, deren Kammervolumen durch Verlagerung eines Kolbens gesteuert vergrößert und verkleinert werden kann, so daß wenn diese Druckkammer über die Umschalt-Ventilvorrichtungen druckmäßig mit der einen oder anderen oder auch mit beiden Bremsdruckleitungen der Hinterradbremsen verbunden ist — der Bremsdruck dort je nach Vergrößerung oder Verkleinerung des Kammervolumens abgesenkt oder wieder angehoben wird. Die unmittelbare Einbeziehung der Druckkammer des Druckmodulators in das Hydrauliksystem der Bremsanlage bedeutet natürlich, daß für das hydraulische Bremssystem eine entsprechend größere Menge an Hydraulikflüssigkeit benötigt wird. Die Verlagerung des Kolbens erfolgt nnit Hilfe zweier durch eine Nennbran Membran voneinander getrennter Hilfskammern, die — gesteuert durch die elektronische Auswerte- und Steuerschaltung — entweder durch eine Unterdruck- oder eine Druckquelle beaufschlagt werden.

Bei diesem bekannten Bremssystem sind lediglich den Hinterrädern Sensoren zugeordnet und der Druckmodulator wirkt lediglich auf die Bremsdruckleitungen der Hinterradbremsen. Die Vorderräder werden nicht überwacht und nicht geregelt.

Der Erfindung liegt nun die Aufgabe zugrunde, den Aufwand für ein hydraulisches und/oder pneumatisches Bremssystem der im Oberbegriff des Patentanspruchs 1 genannten Art zu verringern und dieses insbesondere auch so auszubilden, daß der Bedarf an Bremsfluid gering bleibt.

Diese Aufgabe wird erfindungsgemäß durch die Merkmale des Patentanspruchs 1 gelöst.

Erfindungsgemäß wird also die Funktion des Druckmodulators durch den mechanisch auf den Hauptbremszylinder einwirkende eigentlichen Bremskraftvertärker, der sowieso vorhanden ist, mitübernommen, wozu dieser so modifiziert wird, daß seine Wirkrichtung umgeschaltet werden kann, so daß er durch die elektronische Auswerte- und Steuerschaltung je nach Regelerfordernis entweder in eine die Pedalkraft unterstützende erste Wirkrichtung oder in eine der Bremspedalkraft entgegenwirkende zweite Wirkrichtung umschaltbar ist, wodurch der von ihm mechanisch beaufschlagte nachgeschaltete Hauptbremszylinder entsprechend eine Bremsdruckerhöhung oder Bremsdruckabsenkung bewirkt. Gleichzeitig werden in den regelbaren Bremskreisen einfache ein- und ausschaltbare Sperrventile eingesetzt.

Trotz seines vorteilhaften geringen schaltungstechnischen und baulichen Gesamtaufwandes ermöglicht das erfindungsgemäße Bremssystem, je nach Ausbildung der Anlage und je nach Regelerfordernis, den Bremsdruck entweder nur für die Bremse eines der Fahrzeugräder, für die Bremsen der Räder nur eines, z.B. diagonalen Bremskreises oder aber für die Bremsen sämtlicher Fahrzeugräder zu regeln, d.h. abzusenken, zu halten oder wieder anzuheben.

Grundsätzlich ist bereits ein Antiblockier-Bremssystem für Kraftfahrzeuge bekannt (DE-A 15 55 579, US 38 29 170), bei dem der Bremskraftverstärker als Druckmodulator wirkt und dann, wenn Blockiergefahr an einen der Räder signalisiert wird, aus seinem die Bremspedalkraft unterstützenden ersten Zustand in einen der Bremspedalkraft entgegenwirkenden zweiten Zustand umschaltbar ist. Dieses bekannte Antiblockier-Bremssystem weist jedoch den wesentlichen Mangel auf, daß nur der Bremsdruck der gesamten Brennsanlage, d.h. für sämtliche Räder geregelt wird, und nicht für einzelne Räder oder für einzelne voneinander unabhängige Bremskreise, was zur Folge hat, daß die bei einsetzender Bremsschlupfregelung erzielte Fahrzeugverzögerung vergleichsweise gering ist, es sei denn, daß durch entsprechende Bemessung der Anlage zugelassen wird, daß ein Teil der Räder zumindest kurzzeitig blockieren kann, was dann aber auch nicht ausschließen würde, daß beide Vorderräder gleichzeitig blockieren, wodurch jedoch die Lenkfähigkeit des Fahrzeuges verloren ginge.

Es ist auch bereits grundsätzlich bekannt (GB-A 20 22 742), in den regelbaren Bremskreisen eines antiblockiergeregelten Kraftfahrzeug-Bremssystems ein- und ausschaltbare Sperrventile vorzusehen, um den Brennsdruck in denn hinter diesen Sperrventilen liegenden Teil des betreffenden Brennskreises nach Bedarf auf den dort gerade herrschenden Wert konstant zu halten.

Diese Sperrventile sind jedoch nicht im Rahmen eines mit dem Bremssystem gemäß dem Oberbegriff des Anspruchs 1 vergleichbaren Bremssystems eingesetzt, sondern bei einer vergleichsweise aufwendigen und unkonventionellen pumpenverstärkten hydraulischen Bremsanlage, bei welcher der Primärkammer eines hydraulischen Hauptbremszylinders — gesteuert über ein pedalbetätigtes Bremsventil — von der Hydraulikpumpe o.ä. Hydraulikflüssigkeit zugeführt wird, wobei in der zur Primärkammer führenden Hydraulikleitung eine 3/2-Wege-Ventilvorrichtung angeordnet ist, mit der die Primärkammer wahlweise mit der Hydraulikpumpe oder einem drucklosen Vorratsbehälter verbunden werden kann. Bei mehrkreisigen Bremsanlagen ist dabei für jeden Bremskreis ein eigener Hauptbremszylinder erforderlich.

Erfindungswesentliche vorteilhafte Ausgestaltungen und Weiterbildungen der Erfindung sind in den Unteransprüchen angegeben.

Anhand einiger in der Zeichnung schematisch dargestellter Ausführungsbeispiele wird die Erfindung nachstehend näher erläutert.

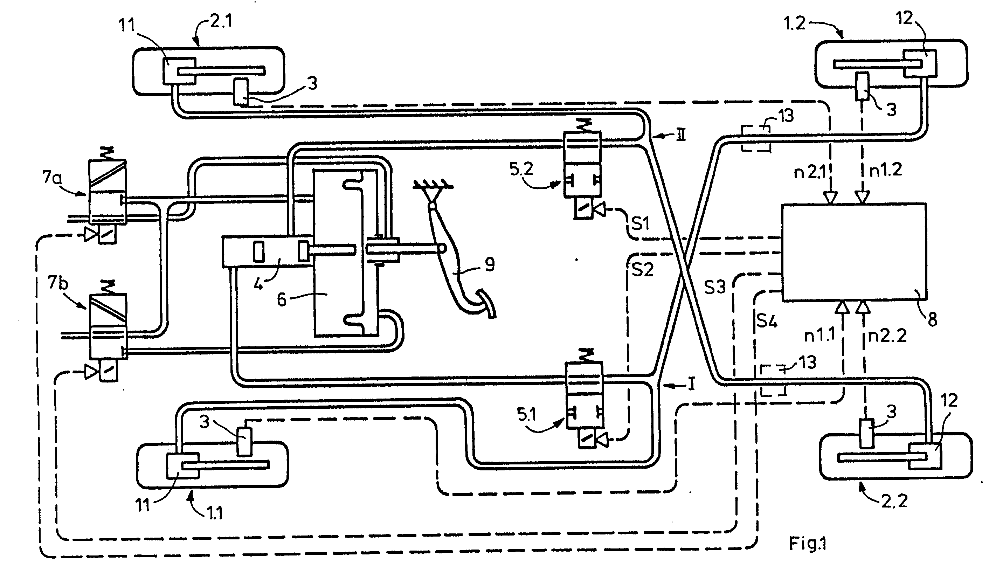

In der Zeichnung zeigen die Figuren 1 bis 3 drei verschiedene Ausführungsbeispiele des erfindungsgemäßen Bremssystems und

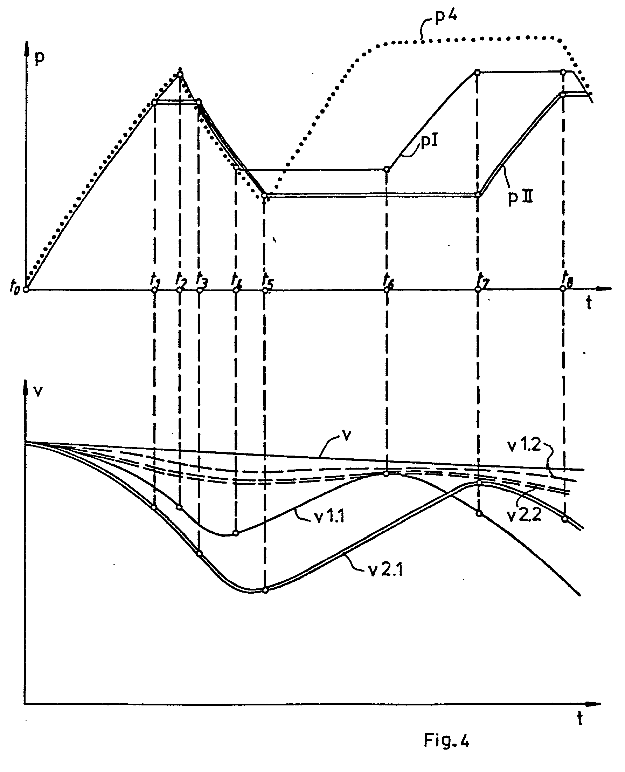

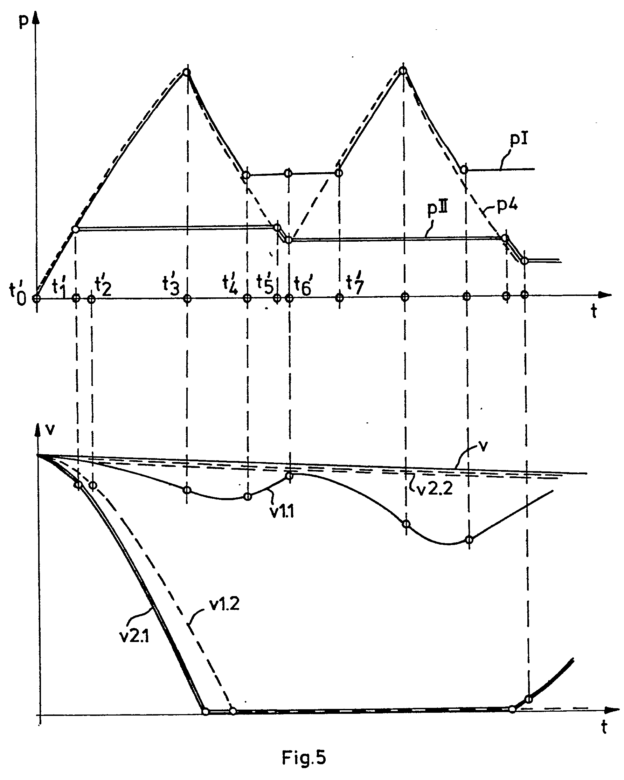

Fig. 4 und 5 das Diagramm eines Regelzyklus'.

In Fig. 1 ist das hydraulische Bremssystem eines Kraftfahrzeuges mit zwei voneinander unabhängigen, diagonal aufgeteilten Bremskreisen I und II dargestellt. Vom Bremskreis I werden das Vorderrad 1.1 und das Hinterrad 1.2 versorgt, während das Vorderrad 2.1 und das Hinterrad 2.2 dem zweiten Bremskreis II angehören. Die Vorderradbremsen sind dabei mit 11 und die Hinterradbremsen mit 12 beziffert. Der Bremsdruck für die Vorder- und Hinterradbremsen wird in üblicher Weise in einem Hauptbremszylinder 4 erzeugt, der unter Zwischenschaltung eines Bremskraftverstärkers 6 vom Bremspedal 9 betätigt wird. In den zu den Hinterradbremsen 12 führenden Bremsdruckleitungen können Bremskraftverteiler, insbesondere Bremsdruckminderer angeordnet sein, die gestrichelt eingezeichnet und mit 13 beziffert sind. Im bisher beschriebenen Umfang unterscheidet sich die dargestellte Bremsanlage nicht von konventionellen Bremsanlagen; sie ist in diesem Umfange insbesondere so ausgebildet, daß sie den gesetzlichen Vorschriften genügt, z.B. der Vorschrift EG 71/320 oder US-Standard 105, was u.a. bedeutet, daß sie auch bei Ausfall des Bremskraftverstärkers oder eines der beiden Bremskreise noch eine ausreichende Fahrzeugverzögerung bewirkt.

An den Fahrzeugrädern 1.1 bis 2.2 sind jeweils Sensoren 3 angeordnet, welche die Drehgeschwindigkeit und/oder Drehverzögerung der Fahrzeugräder erfassen und entsprechende Signale n1.1 bis n2.2 einer elektronischen Auswerte- und Steuerschaltung 8 zuführen, welche aus ihnen in bekannter Weise ermittelt, ob und welche der überwachten Fahrzeugräder zum Blockieren neigen oder zu Blockieren beginnen bzw. welches zuvor blockierte oder blockiergefährdete Rad wieder frei zu laufen beginnt. Entsprechend werden mittels einer in der Auswerteund Steuerschaltung enthaltenen Logikschaltung Steuersignale S1 bis S4 abgegeben, durch welche verschiedene Ventilvorrichtungen etc. ein- oder ausgeschaltet werden, um die aufgetretene Blokkiergefahr in gewünschter Weise zu beseitigen.

Im Ausführungsbeispiel gemäß Figur 1 ist in jedem der beiden voneinander unabhängigen Bremskreise I bzw. II eine als reines Sperrventil wirkende ein- und ausschaltbare Ventilvorrichtung 5.1 bzw. 5.2 angeordnet, und zwar jeweils so, daß sie zwischen dem Hauptbremszylinder 4 und beiden dem zugeordneten Bremskreis zugehörigen Radbremsen liegen. Diese Sperrventile können durch die elektronische Auswerte- und Steuerschaltung 8 aus ihrem dargestellten offenen Zustand in einen gesperrten oder geschlossenen Zustand umgeschaltet werden, so daß der jeweils hinter der gesperrten Ventilvorrichtung liegende Teil des Bremskreises von dem vor dieser Ventilvorrichtung liegenden, mit dem Hauptbremszylinder 4 in Verbindung stehenden Teil dieses Bremskreises völlig getrennt ist. Der Druck in dem hinter der gesperrten Ventilvorrichtung liegenden Teil des Bremskreises bleibt somit konstant unabhängig davon, ob in dem vor der Ventilvorrichtung liegenden Teil des Bremskreises eine Druckabsenkung oder eine Druckanhebung stattfindet.

Weiterhin sind im Ausführungsbeispiel zwei durch von der Auswerte- und Steuerschaltung 8 abgegebene Steuersignale ein- und ausschaltbare Ventilvorrichtungen 7a und 7b vorgesehen, mit deren Hilfe die Wirkrichtung des im Ausführungsbeispiel verwendeten Bremskraftverstärkers 6 je nach Erfordernis umgeschaltet werden kann, nämlich in einen die Bremspedalkraft unterstützenden ersten Zustand oder in einen der Bremspedalkraft entgegenwirkenden zweiten Zustand.

Unter der Annahme, daß die nicht weiter bezifferte Eingangsleitung der Ventilvorrichtung 7a z.B. mit der Atmosphäre und die ebenfalls nicht weiter bezifferte Eingangsleitung der Ventilvorrichtung 7b mit einer nicht weiter dargestellten Unterdruckquelle in Verbindung steht, läge dann im dargestellten Ausführungsbeispiel bei Betätigung des Bremspedals 9 der vorerwähnte erste Zustand vor; diese Verhältnisse entsprechen denen eines im Kraftfahrzeugbau eingesetzten üblichen Unterdruck-Bremskraftverstärkers. Im Prinzip die gleiche Wirkung ergäbe sich natürlich, wenn über die Ventilvorrichtung 7a eine Druckquelle und über die Ventilvorrichtung 7b Atmosphärendruck zur Wirkung gebracht würde. Die Stellgeschwindigkeit des Bremskraftverstärkers 6 hängt dabei von der Größe des auf die nicht weiter bezifferte Membran des Bremskraftverstärkers wirkenden Differenzdrucks ab.

Bei Umschalten der beiden Ventilvorrichtungen 7a und 7b kehren sich die Druckverhältnisse im Bremskraftverstärker und damit auch die wirksame Kraftrichtung um.

Der über die Ventilvorrichtungen 7a und 7b in seiner Wirkrichtung umschaltbare Bremskraftverstärker 6 wird nun nicht nur als üblicher Bremskraftverstärker verwendet, mit dessen Hilfe die vom Fahrzeuglenker während des normalen Bremsbetriebes (keinerlei Blockierneigung der Fahrzeugräder) auf das Bremspedal 9 auszuübenden Kräfte gesenkt werden, sondern zusätzlich auch als Druckmodulator, mit dessen Hilfe der Bremsdruck bei auftretender Blockiergefahr der Fahrzeugräder je nach Erfordernis der Bremsdruck entweder in nur einem oder in mehreren Bremskreisen durch Drucksenken, Druckhalten und Druckanheben nach Maßgabe der von der Auswerte- und Steuerschaltung 8 abgegebenen Steuersignale geregelt wird.

Durch aufeinander abgestimmtes Ein-, Aus- bzw. Umschalten der Sperrventile 5.1 und 5.2 sowie der beiden Ventilvorrichtungen 7a und 7b kann die elektronische Auswerteund Steuerschaltung 8 bei von den Sensoren 3 signalisierter Blockiergefahr sehr flexibel reagieren, um die Blockiergefahr durch entsprechende Regelung des Bremsdruckes zu beseitigen.

Je nach Regelerfordernis ist es also z.B. möglich, bei signalisierter Blockiergefahr entweder beide Sperrventile 5.1 und 5.2 im dargestellten offenen Zustand zu belassen oder eines der beiden Sperrventile vom offenen in den gesperrten Zustand umzuschalten; es ist auch möglich, zunächst beide Sperrventile im dargestellten offenen Zustand zu belassen und anschließend eines oder sogar abwechselnd das eine oder das andere Sperrventil umzuschalten. Je nach dem, ob beide Sperrventile 5.1 und 5.2 oder nur eines der beiden Sperrventile geöffnet ist, ist das vom als Druckmodulator arbeitenden Bremskraftverstärker 6 nach Maßgabe der von der Steuerschaltung 8 abgegebenen Steuersignale bewirkte Drucksenken oder Druckanheben in beiden Bremskreisen I und II oder nur in einem der beiden Bremskreise wirksam, während der Druck in dem hinter einem in seinen gesperrten Zustand umgeschalteten Sperrventil liegenden Bremskreis auf den dort zuvor herrschenden Wert konstant gehalten wird (Druckhalten).

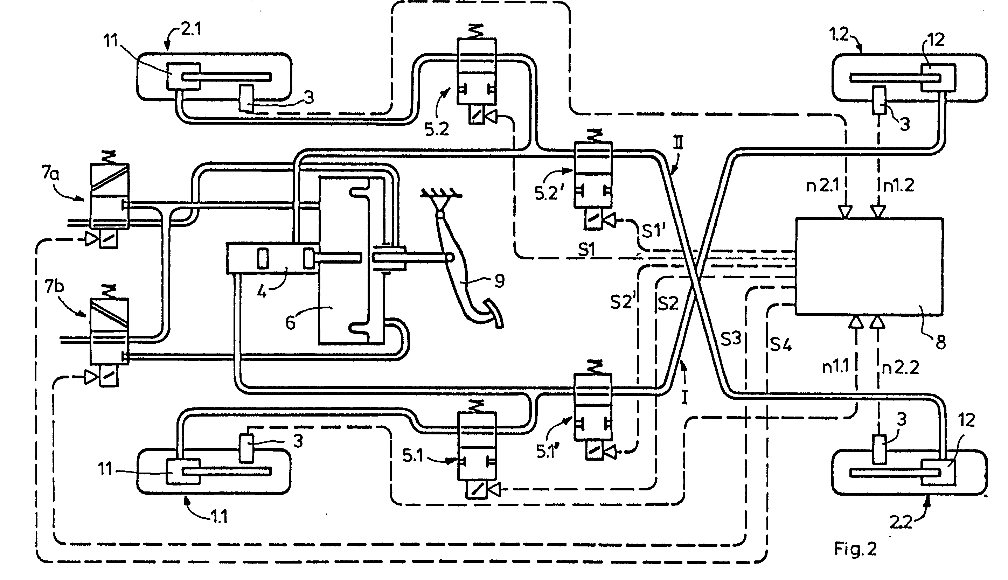

Während im Ausführungsbeispiel gemäß Figur 1 zwei Sperrventile 5.1 und 5.2 vorgesehen sind, durch deren Betätigung jeweils ein kompletter Bremskreis I bzw. II betroffen ist, sind im Ausführungsbeispiel gemäß Figur 2 insgesamt vier Sperrventile 5.1, 5.1' bzw. 5.2 und 5.2' vorgesehen, so daß der Bremsdruck für jedes der Fahrzeugräder unabhängig von den übrigen abgesperrt werden kann, was natürlich eine feinere Regelung der einzelnen Radbremsdrücke ermöglicht. Während im Ausführungsbeispiel gemäß Figur 1 zusammen mit dem Bremsdruck des blockiergefährdeten Vorderrades zwangsläufig auch der Bremsdruck des im gleichen Bremskreis liegenden, u. U. nicht blockiergefährdeten Hinterrades abgesenkt wird wodurch an sich ausnutzbare Bremskraft verloren geht-, kann im Ausführungsbeispiel gemäß Figur 2 dieses Hinterrad in vorteilhafter Weise durch Sperren des zusätzlichen Sperrventils 5.1' bzw. 5.2' druckmäßig vom im gleichen Bremskreis liegenden Vorderrad abgekoppelt werden, zumindest während der Phasen, in denen der Bremsdruck dieses Rades durch den Druckmodulator abgesenkt wird. Da der Bremsdruck im so abgetrennten Hinterrad-Teilbremskreis auf den Wert konstant gehalten wird, der im Zeitpunkt der Betätigung des Sperrventiles vorlag, wird über dieses Hinterrad somit eine höhere Bremskraft aufgebracht als ohne Betätigung des zusätzlichen Sperrventils.

Es ist auch möglich, diese zusätzlichen Sperrventile 5.1' und 5.2' während der Zeit, in der von den Sensoren 3 keine Blockiergefahr signalisiert wird und der Bremskraftverstärker 6 somit als normaler Bremskraftverstärker und nicht als Druckmodulator wirkt, als lastabhängige Druckbegrenzer einzusetzen, wie dies in ähnlicher Weise z. B. aus der DE-OS 31 09 372 bekannt ist.

Wenn dieser zusätzliche schaltungs- und regelungstechnische Aufwand bei Bremsanlagen, bei denen die Radbremsen derart bemessen sind, daß die Haftwertausnutzung an den Rädern der Vorderachse höher ist als an denen der Hinterachse, vermieden werden soll oder muß, ist es bei einer Bremsanlage der in Figur 1 gezeigten Art von Vorteil, in den zu den Hinterradbremsen 12 führenden Bremsleitungen je einen Bremsdruckminderer 13 mit einer definierten spürbaren Hysterese anzuordnen. Dadurch wird erreicht, daß im durch den als Druckmodulator arbeitenden Bremskraftverstärker 6 druckgeregelten Bremskreis (zugehöriges Sperrventil ist offen) beim Drucksenken der Bremsdruck dieses nicht blockiergefährdeten Hinterrades weniger stark abgesenkt wird als wenn der Bremsdruckminderer ohne spürbare Hysterese ausgebildet wäre.

Durch diese Bemessung des Bremsdruckminderers werden die Funktionseigenschaften der in Fig. 1 dargestellten schaltungstechnisch relativ einfachen Bremsanlage denen der schaltungs- und regelungstechnisch aufwendigeren Anlage gemäß Figur 2 angenähert.

Mit den in den Figuren 1 und 2 dargestellten Bremssystemen lassen sich für alle auftretenden Bremssituationen Regelungsmaßnahmen durchführen, die ein ordnungsgemäßes Fahr- und Bremsverhalten des Fahrzeuges gewährleisten.

Die Bremsdruckregelung für die beiden Bremskreise I und II mit Hilfe des für beide Kreise als einzigen Druckmodulator einsetzbaren Bremskraftverstärkers 6 und der Sperrventile 5.1 etc. erfolgt nicht nach einem starren Schema, sondern nach Bedarf und erforderlichenfalls wechselweise.

Die Regelerfordernisse können sehr unterschiedlich sein. Bei Geradeausfahrt und gleichmäßiger Fahrbahn ist es in erster Linie wichtig, eine höchstmögliche Verzögerung des Fahrzeugs zu erzielen. Deshalb ist es von Vorteil, die elektronische Auswerte- und Steuerschaltung 8 so auszubilden, daß sie bei der Druckregelung mittels des Druckmodulators jeweils dem Bremskreis Vorrang einräumt, in dem aufgrund der ausgewerteten Sensorsignale eine Druckanhebung erforderlich bzw. zweckmäßig ist und den Bremskreis, in dem zur gleichen Zeit aufgrund der ausgewerteten Sensorsignale an sich ein Drucksenken zweckmäßig wäre, zunächst außer Acht läßt. Wenn dadurch das von den Sensoren als blockiergefährdet signalisierte Rad dieses zweiten Bremskreises in höheren Schlupf einläuft und letztlich sogar blockiert, ist dies nahezu unerheblich, da der Bremsdruck für die Räder des ersten Bremskreises optimal geregelt wird.

Bei Kurvenfahrt bzw. bei unterschiedlichen Reibwerten links und rechts kommt es dagegen in erster Linie darauf an, daß das jeweils kurvenäußere Vorderrad, bzw. das auf dem höheren Reibwert laufende Rad optimal geregelt wird, um die gute Lenkfähigkeit des Fahrzeuges auch beim Bremsen zu erhalten. Das bedeutet aber, daß die elektronische Auswerte- und Steuerschaltung 8 den Regelerfordernissen des kurvenäußeren Vorderrades bzw. des auf dem höheren Reibwert laufenden Vorderrades Vorrang vor denen des anderen Vorderrades einräumen muß.

Die vorerwähnten verschiedenen Fälle Geradeausfahrt/gleichmäßige Fahrbahn-Reibewerte einerseits und Kurvenfahrt/ungleichmäßige Fahrbahn-Reibwerte links bzw. rechts andererseits lassen sich für die notwendige Regelung in einfacher Weise dadurch unterscheiden, daß in dem einen Fall nur an den Vorderrädern und im anderen Fall zusätzlich auch an einem der Hinterräder Schlupfgefahr signalisiert wird. Hierbei ist vorausgesetzt; daß in üblicher Weise eine gute Bremsabstimmung zwischen der Vorder- und der Hinterachse vorgesehen ist, d. h., daß die Radbremsen so bemessen sind, daß normalerweise die Vorderräder stets vor den Hinterrädern blockieren, wobei der Abstand zwischen beiden jedoch nicht zu groß ist.

Demgemäß ist die elektronische Auswerte- und Steuerschaltung 8 durch Einsatz an sich bekannter logischer Schaltungen wie folgt bemessen:

1. Wenn von den Sensoren beider Hinterräder 1.2 und 2.2 entgegen der Annahme, daß die Vorderräder stets vor den Hinterrädern blockieren, Blockiergefahr signalisiert wird, dann wird in beiden Bremskreisen I und II durch den als Druckmodulator arbeitenden Bremskraftverstärker 6 der Bremsdruck solange abgesenkt, bis von den Sensoren signalisiert wird, daß an einem der Hinterräder 1.2 bzw. 2.2 die Blockiergefahr beseitigt ist. Zur Durchführung dieser Maßnahmen verbleiben somit die Sperrventile 5.1 etc. im dargestellten geöffneten Zustand, während der Bremskraftverstärker 6 durch Betätigen der Ventilvorrichtungen 7a und 7b den Regelerfordernissen entsprechend zunächst in seinen zweiten und anschließend in seinen ersten Zustand umgeschaltet wird.

2. Wenn von den Sensoren 3 für eines der beiden Vorderräder 1.1 bzw. 2.1 Blockiergefahr signalisiert wird, dann wird der Bremsdruck im Bremskreis dieses blockiergefährdeten Vorderrades durch Umschalten des in diesem Bremskreis liegenden Sperrventils 5.1. bzw. 5.2 in den gesperrten Zustand konstant gehalten, während der Bremsdruck im anderen Bremskreis entsprechend der Pedalbetätigung weiter ansteigen kann. Während für diesen Betriebsfall bei einer Anlage gemäß dem Ausführungsbeispiel der Figur I nicht nur der Bremsdruck des blockiergefährdeten Vorderrades, sondern auch der des in diesem Bremskreis liegenden Hinterrades konstant gehalten wird, kann in einer Bremsanlage gemäß dem Ausführungsbeispiel der Figur 2 durch Nichtumschalten des zusätzlichen Sperrventils 5.1' bzw. 5.2' der Bremsdruck dieses Hinterrades zusammen mit dem Bremsdruck der übrigen Räder weiter angehoben werden. Wenn die signalisierte Blockiergefahr des Vorderrades jedoch eine vorbestimmte längere Zeit, z. B. O,5 Sekunden, andauert, dann ist es von Vorteil, im Bremskreis dieses Vorderrades die Bremsdruck-Regelung einzuleiten. Dies bedeutet, daß das bzw.die Sperrventile des anderen Bremskreises durch von der Auswerte- und Steuerschaltung 8 gelieferte Steuersignale $S_1$ etc. in ihren sperrenden Zustand umgeschaltet werden, während gleichzeitig der Bremskraftverstärker 6 als Druckmodulator aktiviert wird, indem die Ventilvorrichtungen 7a und 7b entsprechend dem Regelerfordernis zunächst so umgeschaltet werden, daß der Bremskraftverstärker zur Beseitigung der Blockiergefahr bzw. des Blockierens zunächst in seinen der Bremspedalkraft entgegenwirkenden zweiten Zustand versetzt wird. Bei Beendigung der Blockiergefahr wird er durch entsprechende Betätigung der Ventilvorrichtungen 7a und 7b wieder in seinen ersten Zustand versetzt, wodurch der Druck im beaufschlagten Bremskreis wieder angehoben wird.

3. Wenn nur eines der beiden Hinterräder 1.2 und 2.2 als blockiergefährdet signalisiert wird, dann wird der Bremsdruck im Bremskreis des nicht blockiergefährdeten Hinterrades konstant gehalten, d. h. das in dessen Bremskreis angeordnete Sperrventil wird in seinen gesperrten Zustand umgeschaltet.

4. Wenn sowohl für ein Vorderrad als auch für ein damit seitengleiches Hinterrad Blockiergefahr signalisiert wird, was an sich eine Kombination der unter den punkten 2 und 3 aufgeführten Situationen darstellt, werden unabhängig davon, für welches der beiden Räder die Blockiergefahr zuerst gemeldet wird, die unter Punkt 2, und nicht die unter Punkt 3 aufgeführten Regelungsmaßnahmen durchgeführt.

5. Wenn sowohl für ein Vorderrad als auch für ein dazu diagonales Hinterrad Blockiergefahr angezeigt wird, dann wird unabhängig davon, welches der beiden Blockier-Signale zuerst erscheint, der Bremsdruck des dieses Vorderrad enthaltenden Bremskreises ohne Zeitverzögerung geregelt, d. h. dieser Bremskreis wird durch den Druckmodulator entsprechend den Regelerfordernissen beaufschlagt, während gleichzeitig der Druck des anderen Bremskreises durch Umschalten des darin befindlichen Sperrventils 5.1 bzw. 5.2 konstant gehalten wird.

6. Wenn für beide Vorderräder und keines der Hinterräder Blockiergefahr bzw. Blockieren signalisiert wird, dann werden die diese Vorderräder enthaltenden Bremskreise, d. h. im Ausführungsbeispiel also beide Bremskreise, durch den Druckmodulator den Regelerfordernissen entsprechend beaufschlagt. Das bedeutet, daß im Ausführungsbeispiel gemäß Figur 1 keines der beiden Sperrventile und im Ausführungsbeispiel gemäß Figur 2 zumindest die Sperrventile 5.1 und 5.2 im dargestellten offenen Zustand belassen werden. Dieser Zustand wird solange aufrechterhalten, wie die Regelerfordernisse in den Bremskreisen der beiden blockiergefährdeten Vorderräder gleichgerichtet sind, d. h. solange, wie entweder in beiden Kreisen der Druck weiter abgesenkt oder in beiden Kreisen — nach Fortfall der Blockiergefahr — wieder angehoben werden muß. Wenn jedoch die Regelerfordernisse für die Bremskreise der beiden Vorderräder infolge des Fortfalls der Blockiergefahr an nur einem der beiden Vorderräder einander entgegengerichtet werden, wenn also in dem einen Bremskreis vom Regelerfordernis her eine weitere Druckabsenkung und im anderen Kreis bereits eine Druckanhebung erstrebenswert wäre, dann wird dem Regelerfordernis "Druckaufbau" Vorrang vor dem Regelerfordernis "Druckabbau" gegeben, d. h. das Sperrventil 5.1 bzw. 5.2 des das nach wie vor blockiergefährdete Rad enthaltenden Bremskreises wird in den sperrenden Zustand umgeschaltet, so daß der Druck dieses Bremskreises konstant gehalten wird, während der Druck im Bremskreis des nicht mehr blockiergefährdeten Vorderrades durch den Druckmodulator entsprechend dem Regelerfordernis dieses Bremskreises im vorliegenden Falle des Erfordernisses "Druckaufbau" — geregelt wird. Die hier geschilderte Situation ist typisch für die Fahrsituation Geradeausfahrt und/oder gleichmäßige Fahrbahn-Reibwerte.

7. Wenn in einem Bremssystem mit zwei Diagonalbremskreisen für beide Vorderräder und für eines der Hinterräder Blockiergefahr bzw. Blockieren signalisiert wird, dann werden — wie unter Punkt 6 — zunächst beide Bremskreise entsprechend den Regelerfordernissen der Vorderräder durch den Druckmodulator beaufschlagt, d. h. im Druck gesenkt und ggf. später im Druck wieder angehoben. Auch hier werden die Sperrventile somit zunächst in ihrem offenen Zustand belassen; bei Anlagen gemäß Figur 2 ist es natürlich wiederum möglich, die zusätzlichen Sperrventile 5.1' bzw. 5.2' in ihren sperrenden Zustand umzuschalten, wenn für die Vorderräder eine Druckabsenkung vorgenommen wird. Die gemeinsame Beaufschlagung der Bremskreise durch den Druckmodulator währt solange, wie die Regelerfordernisse für die beiden Vorderräder gleichgerichtet sind. Dann, wenn die Regelerfordernisse für die beiden Vorderräder einander entgegengerichtet werden, weil die Blockiergefahr für eines der beiden Vorderräder fortgefallen ist, dann wird das Sperrventil in dem Diagonalbremskreis, in dem das blockiergefährdete Hinterrad nicht enthalten ist, in seinen Sperrzustand umgeschaltet, so daß der Druck in diesem Diagonalbremskreis konstant gehalten wird, während der Druck in dem das blockiergefährdete Hinterrad enthaltenden diagonalen Bremskreises vom Druckmodulator beaufschlagt wird, d. h. entsprechend seinem Regelerfordernis im Druck geregelt wird. Diese Verhältnisse sind repräsentativ für Kurvenfahrt und/oder ungleichmäßige Fahrbahn-Reibwerte.

In Figur 4 ist ein Regelzyklus entsprechend der unter Punkt 6 geschilderten Situation dargestellt, wobei im oberen Teil des Diagramms die verschiedenen Drücke im Bremssystem und im unteren Teil des Diagramms die verschiedenen Geschwindigkeiten jeweils als Funktion der Zeit dargestellt sind, wobei der vom Druckmodulator bzw. vom Bremskraftverstärker gelieferte Druck p4 punktiert, der Bremsdruck pl im Bremskreis 1 als Vollinie und der Bremsdruck pll im Bremskreis II als Doppel-Vollinie dargestellt sind. In entsprechender Weise sind im unteren Diagramm die Drehgeschwindigkeit v2.1 des rechten Vorderrades 2.1 als Voll-Doppellinie, die Drehgeschwindigkeit v1.1 des linken Vorderrades 1.1 als Vollinie, die Drehgeschwindigkeit v2.2 des linken Hinterrades als gestrichelte Doppellinie und Drehgeschwindigkeit vl.2 des rechten Hinterrades 1.2 als gestrichelte Linie dargestellt. Die Fahrzeuggeschwindigkeit v selbst ist als dünne Vollinie gezeichnet. Die gleiche Bezeichnungsweise ist auch in Fig. 5 verwendet worden, die ein Diagramm der unter Punkt 7 geschilderten Situation darstellt.

In Fig. 4 bezeichnet $t_0$ den Beginn einer Bremsung. Entsprechend der Pedalbetätigung steigt daher der Druck in der Bremsanlage und zwar zunächst in beiden Bremskreisen I und II in gleicher Weise. Hierbei ist wie eingangs erwähnt angenommen, daß die Bremsanlage so bemessen ist, daß die Reibwertausnutzung der Vorderräder größer ist als die der Hinterräder. Es wird angenommen, daß zum Zeitpunkt $t_1$ für das rechte Vorderrad 2.1 Blockiergefahr signalisiert wird. Entsprechend punkt 2 der obigen Aufzählung wird. daher das Sperrventil 5.2 des zugehörigen Bremskreises II in den gesperrten Zustand umgeschaltet, so daß der Bremsdruck für das blockiergefährdete rechte Vorderrad konstant gehalten wird. Der Bremsdruck im anderen Bremskreis I wird demgegenüber vom als Druckmodulator arbeitenden Bremskraftverstärker 6 mit dem Druck p4 beaufschlagt, so daß der Druck in diesem Bremskreis entsprechend dem vom Bremskraftverstärker vorgegebenen Druck weiter ansteigt. Man erkennt, daß sich diese Situation unter Punkt 6 für entgegengerichtete Regelerfor-dernisse subsummieren läßt.

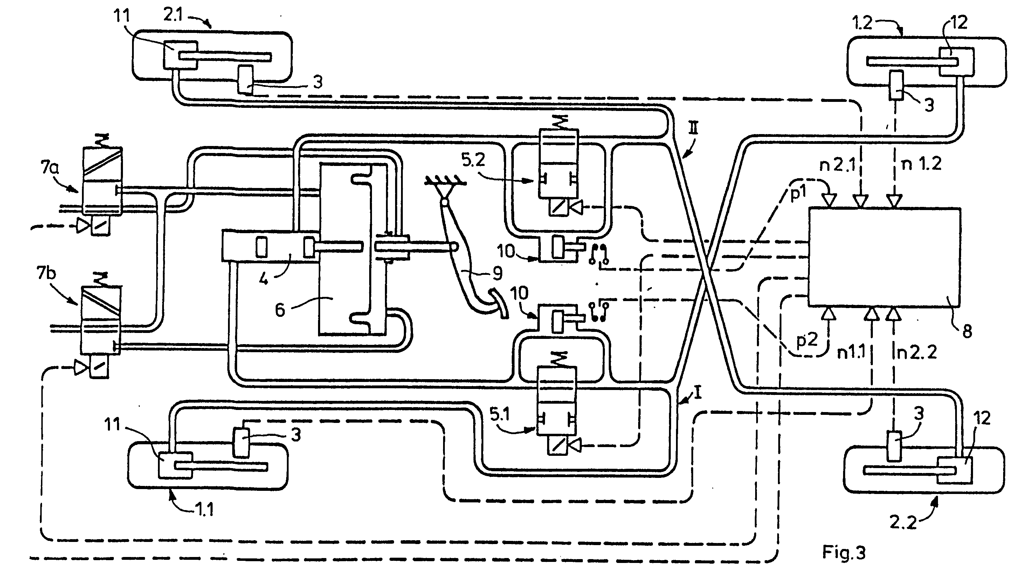

Zum Zeitpunkt $t_2$ wird auch für das linke Vorderrad 1.1 Blockiergefahr gemeldet. Für beide Vor-derräder gelten somit gleichgerichtete Regeler-fordernisse, nämlich den Druck zu senken, um die Blockiergefahr dieser Räder zu beseitigen. Bei Anordnungen gemäß den Figuren 1 und 2 würde daher das zunächst in den sperrenden Zustand geschaltete Sperrventil 5.2 wieder geöffnet werden und beide Bremskreise vom drucksenkenden Druckmodulator beaufschlagt werden wozu der Bremskraftverstärker 6 in seinen zweiten Zustand umgeschaltet wird. Im Diagramm 4 ist jedoch davon ausgegangen worden, daß — wie im Ausführungsbeispiel gemäß Fig. 3 gezeigt — den Sperrventilen 5.1 und 5.2 je ein Differenz-druckschalter 10 parallelgeschaltet ist, der ein der elektronischen Auswerteund Steuerschaltung zuführbares Signal dann erzeugt, wenn der Druck vor dem Sperrventil höher ist als hinter dem Sperrventil und eine Umschaltung des Sperrventils aus dem gesperrten in den offenen Zustand erst dann zuläßt, wenn der Druck vor dem Sperrventil zumindest nur noch annähernd so hoch ist wie hinter dem Sperrventil. Im Diagramm gemäß Figur 4 bedeutet dies, daß zum Zeitpunkt $t_2$ das zuvor in den gesperrten Zustand umgeschaltete Sperrventil 5.2 zunächst noch in diesem Zustand verharrt, weil der Druck vor diesem Sperrventil, nämlich der Druck p4, höher ist als hinter dem Sperrventil, nämlich der Druck plI.

Erst zum Zeitpunkt $t_3$ ist der vom Druckmodula-tor erzeugte und im Bremskreis I herrschende Druck auf einen Wert abgesunken, der zumindest annähernd dem im Bremskreis plI herrschenden Druck entspricht, was der elektronischen Auswerte- und Steuerschaltung 8 durch den zugeordneten Differenz-Druckschalter 10 signalisiert wird und zur Umschaltung dieses Sperrventils in den geöffneten Zustand bewirkt. Der Druckmodulator beaufschlagt somit beide Bremskreise, so daß die Bremsdrücke pl und plI beider Bremskreise dem gleichgerichteten Regelerfordernis entsprechend abgesenkt werden. Zum Zeitpunkt $t_4$ wird der Steuerschaltung 8 signalisiert, daß das linke Vorderrad 1.1 wieder beschleunigt wird (die Regelabweichung, d. h. Schlupf, aber nach wie vor besteht).

Aufgrund dieses Signals wird das in Bremskreis dieses Vorderrades 1.1, d. h. im Bremskreis I, angeordnete Sperrventil 5.1 eingeschaltet, wodurch Bremskreis I vom Druckmodulator 4/6 abgetrennt und der Druck pl auf den zu dieser Zeit herrschenden Wert konstant gehalten wird, während der Druck des Bremskreises 11, in dem das rechte Vorderrad 2.1 liegt, weiter vom Druckmodulator bestimmt und somit weiter abgesenkt wird.

Zum Zeitpunkt $t_5$ wird der Steuerschaltung 8 signalisiert, daß nun auch das rechte Vorderrad 2.1 wieder beschleunigt wird (die Regelabweichung aber noch besteht), woraufhin einerseits das im Bremskrels dieses Vorderrades 2.1, dem Bremskreis II, angeordnete Sperrventil 5.2 eingeschaltet und ebenfalls vom Druckmodulator 4/6 abgetrennt, und andererseits der Bremskraftverstärker 6 des Druckmodulators wieder in seinen die Bremspedalkraft unterstützenden ersten Zustand (Druckaufbau) umgeschaltet wird, so daß der vom Druckmodulator abgegebene Druck p4 ansteigt. Da die beiden Sperrventile 5.1 und 5.2 wegen der nach wie vor signalisierten Regelabweichungen noch eingeschaltet bleiben, wirkt sich der ansteigende Druck p4 aber in den beiden Bremskreisen I und II zunächst nicht aus.

Zum Zeitpunkt $t_6$ ist die Geschwindigkeit des linken Vorderrades 1.1 wieder so weit angestiegen, daß der Steuerschaltung 8 für dieses Rad das Ende der Blockiergefahr signalisiert wird, wodurch das dem Rad 1.1 zugeordnete Sperrventil 5.1 geöffnet wird, so daß der Druck pl in diesem Bremskreis I wieder ansteigen kann.

Im Zeitpunkt $t_7$ treten zwei Ereignisse gleichzei-tig ein:

Einerseits wird signalisiert, daß die Drehgeschwindigkeit v2.1 des rechten Vorderrades 2.1 wieder so weit angestiegen ist, daß für dieses Rad keine Blockiergefahr mehr besteht — was einen Druckaufau in diesem Bremskreis II erfordern würde — und andererseits wird für das Linke Vorderrad 1.1 erneut Blockiergefahr signalisiert, was für diesen Kreis an sich einen Druckabbau erfordern würde. Die Regelerfordernisse für die beiden Vorderräder sind einander also zu diesem Zeitpunkt entgegengerichtet.

Entsprechend Punkt 6 der zuvor erläuterten Aufstellung wird von der elektronischen Steuer-und Auswerteschaltung 8 bei dieser Konstellation dem Regelerfordernis "Druckaufbau" Vorrang gegeben vor dem Regelerfordernis "Druckabbau" und demzufolge das Sperrventil 5.1 des Bremskreises I wieder eingeschaltet, mit der Folge, daß der Druck pl dieses Kreises konstant gehalten wird, während der Druck plI des anderen Kreises ansteigen kann.

In Figur 5 ist ein Regelzyklus beschrieben, wie er bei Kurvenfahrt bzw. bei asymmetrischer Fahrbahn auftreten kann und wie er unter Punkt 5 geschildert ist. Die Bezeichnungsweise stimmt mit der in Figur 4 gewählten Bezeichnungsweise überein.

In Figur 5 bezeichnet $t'_0$ den Beginn eines Bremsvorganges. Entsprechend der Pedalbetätigung durch den Fahrzeugführer steigt der vom Hauptbremszylinder 4 abgegebene Druck p4 der Bremsanlage zunächst in gewohnter Weise an, und zwar in beiden Bremkreisen I und II. Im unteren Teil des Diagramms ist dargestellt, daß die Drehgeschwindigkeit v2.1 und v1.2 des rechten Vorderrades 2.1 und des rechten Hinterrades 1.2 stark abfällt, weil diese Räder z. B. auf der Straßenseite mit besonders niedrigem Reibwert oder beim Durchfahren einer Kurve auf der Kurveninnenseite laufen. Es wird angenommen, daß zum Zeitpunkt $t'_1$ das rechte Vorderrad 2.1 zu schlüpfen beginnt, d. h. eine Regelabweichung bekommt, und demzufolge der elektronischen Steuer- und Auswerteschaltung 8 vom zugeordneten Sensor 3 für dieses Rad Blockiergefahr signalisiert wird. Wie in dem in Fig. 4 dargestellten Fallbeispiel wird somit entsprechend Punkt 2 der obigen Aufzählung das Sperrventil 5.2 des zugehörigen Bremskreises II in den gesperrten Zustand umgeschaltet, so daß der Bremsdruck für das blockiergefährdete rechte Vorderrad 2.1 konstant gehalten wird. Der Bremsdruck im anderen Bremskreis I wird demgegenüber vom als Druckmodulator arbeitenden Bremskraftverstärker 6 mit dem Druck p4 beaufschlagt, so daß der Druck in diesem Bremskreis entsprechend dem vom Bremskraftverstärker vorgegebenen Druck weiter ansteigt.

Zum Zeitpunkt $t'_2$ beginnt auch das rechte Hinterrad 1.2 zu schlüpfen. Obgleich wegen dieser Regelabweichung der elektronischen Steuer- und Auswerteschaltung 8 für dieses Rad Blockiergefahr signalisiert wird, wird durch diese entsprechend Punkt 4 der obigen Aufzählung kein Regeleingriff ausgelöst, um dem entgegenzuwirken, d. h. es wird zugelassen, daß der Druck pl in dem diesem Hinterrad zugeordneten Bremskreis I weiter ansteigt.

Zum Zeitpunkt $t'_3$ tritt auch am linken Vorderrad 1.1 eine Regelabweichung auf, d. h. dieses Rad beginnt zu schlüpfen, so daß der elektronischen Steuer- und Auswerteschaltung signalisiert wird, daß für dieses Rad ebenfalls Blockiergefahr besteht, so daß der Steuerschaltung nunmehr für die beiden Vorderräder und eines der Hinterräder Blockiergefahr signalisiert ist. Entsprechend den Punkten 6 und 7 der obigen Aufzählung müssen daher die die beiden Vorderräder enthaltenden Bremskreise, d. h. beide Bremskreise I und II, durch den Druckmodulator den Reglerfordernissen entsprechend beaufschlagt werden. Von der elektronischen Steuer- und Auswerteschaltung 8 wird- daher der Bremskraftverstärker 6 des Druckmodulators in seinen der Pedalkraft entgegenwirkenden zweiten Zustand umgeschaltet, so daß sein Ausgangsdruck p4 absinkt. Damit der Druckmodulator entsprechend den Punkten 6 und 7 beide Bremskreise I und II beaufschlagen kann, müßten beide Sperrventile ausgeschaltet, d. h. in ihrem offenen Zustand sein. Im vorliegendem Falle ist zwar das Sperrventil 5.1 geöffnet, das Sperrventil 5.2 ist jedoch zum Zeitpunkt $t'_1$ eingeschaltet, d.h. in den gesperrten Zustand versetzt worden. Bei Bremsanlagen, in denen wie in den Ausführungsbeispielen gemäß den Figuren 1 und 2 einfache Sperrventile vorgesehen sind, würde im vorliegendem Falle zum Zeitpunkt $t'_3$ das zuvor gesperrte Sperrventil 5.2 in seinen offenen Zustand umgeschaltet werden. In dem in Fig. 5 dargestellten Diagramm ist jedoch — wie im Diagramm 4 — davon ausgegangen worden, daß den Sperrventilen 5.1 und 5.2 wie im Ausführungsbeispiel gemäß Fig. 3 gezeigt — je ein Differenzdruckschalter 10 parallelgeschaltet ist, der ein der elektronischen Auswerte- und Steuerschaltung 8 zuführbares Signal dann erzeugt, wenn der Druck vor dem Sperrventil höher ist als hinter dem Sperrventil. Bei einer solchen Anordnung ist die elektronische Steuer- und Auswerteschaltung so ausgebildet, daß eine Umschaltung des Sperrventils aus dem gesperrten in den offenen Zustand erst bei Eingang dieses Signals des Differenzdruckschalters vorgenommen wird, d. h. erst dann, wenn der Druck vor dem Sperrventil zumindest nur noch annähernd so hoch ist wie hinter dem Sperrventil. Im Diagramm gemäß Figur 5 bedeutet dies, daß zum Zeitpunkt $t'_3$ somit zwar der Druck pl im Bremskreis I entsprechend dem Druck p4, des Druckmodulators abgesenkt wird, daß der Druck pll des Bremskreises II jedoch wegen des gesperrt bleibenden Sperrventils 5.2 seinen konstanten — niedrigeren — Wert beibehält, weil ja der Druck vor dem Sperrventil, nämlich der Druck p4, größer ist als hinter dem Sperrventil, nämlich der Druck pll. Bei Anordnungen ohne Differenzdruckschalter 10, d. h. bei Anordnungen gemäß den Figuren 1 und 2 hätte das Umschalten des Sperrventils 5.2 zum Zeitpunkt $t'_3$ zur Folge, daß der Druck pll des Bremskreises II von seinem an sich niedrigen Wert zunächst auf den höheren Druckwert p4 ansteigen müßte und erst danach zusammen mit diesem wieder abgesenkt werden würde. Im vorliegendem Falle behält der Druck pll in vorteilhafter Weise seinen niedrigen Druck gleich bei.

Zum Zeitpunkt $t'_4$ wird der Steuerschaltung 8 signalisiert, daß das linke Vorderrad 1.1. wieder beschleunigt wird (eine Regelabweichung als solche aber noch besteht), so daß eine weitere Druckabsenkung für dieses Rad nicht mehr erforderlich ist. Demzufolge wird von der Steuerschaltung 8 das Sperrventil 5.1 eingeschaltet, so daß der Druck pl des Bremskreises I trotz weiter absinkenden Druckes p4 des Druckmodulators konstant gehalten wird.

Zum Zeitpunkt $t'_5$ ist der Druck p4 des Druckmodulators so weit abgesunken, daß der Eingangsdruck des vorausgesetzten Differenzdruckschalters 10 zumindest annähernd so hoch ist wie dessen Ausgangsdruck, was der Steuerschaltung 8 durch ein entsprechendes Signal pl signalisiert wird. Aufgrund dieses Signals wird das zuvor gesperrte Sperrventil 5.2 geöffnet, so daß der Druck pll des Bremskreises II entsprechend dem Druck p4 absinkt.

Zum Zeitpunkt $t'_6$ wird der Steuerschaltung 8 signalisiert, daß die Blockiergefahr für das linke Vorderrad 1.1 beseitigt ist, weil die Drehgeschwindigkeit v1.1 einen entsprechend hohen Wert erreicht hat Für dieses Vorderrad 1.1 besteht somit zum Zeitpunkt $t'_6$ das Reglerfordernis "Druckaufbau". Für das rechte Vorderrad 2.1 besteht demgegenüber nach wie vor das dazu entgegengerichtete Reglerfordernis "Druckabbau". Im Hinblick darauf, daß auch das rechte Hinterrad 1.2 blockiert, muß entsprechend Punkt 7 der obigen Aufzählung dem Reglerfordernis des Vorderrades Vorrang eingeräumt werden, der im gleichen Bremskreis liegt, wie das blockierte Hinterrad, d. h. also dem Regelerfordernis des linken Vorderrades 1.1. Zum Zeitpunkt $t'_6$ wird somit zum einen das Sperrventil 5.2 eingeschaltet, um den Druck pII des anderen Vorderrades, nämlich des rechten Vorderrades 2.2 konstant zu halten, und zum anderen wird der Bremskraftverstärker 6 des Druckmodulators wieder in seinen das Bremspedal unterstützenden ersten Zustand umgeschaltet, so daß der Druck p4 wieder zu steigen beginnt. Das seit dem Zeitpunkt $t'_4$ eingeschaltete Sperrventil 5.1, welches bei Anordnungen gemäß den Figuren 1 und 2 zu diesem Zeitpunkt ausgeschaltet, d. h. geöffnet werden würde, bleibt im vorliegen dem Falle, in dem gemäß Fig. 3 parallelgeschaltete Differenzdruckschalter 10 vorausgesetzt sind, weiter eingeschaltet, weil Eingangsdruck und Ausgangsdruck am dem gesperrten Sperrventil 5.1 zugeordneten Differenzdruckschalter unterschiedlich groß sind. Der Druck pI behält somit seinen Wert zunächst bei.

Zum Zeitpunkt $t'_7$ ist der Druck p4 des Druckmodulators so weit angestiegen, daß Eingangs- und Ausgangsdruck des vorerwähnten Differenzdruckschalters zumindest annähernd übereinstimmen, so daß das Sperrventil 5.1 ausgeschaltet wird und der Druck pI entsprechend ansteigt. Die weiteren Abläufe ähneln den zuvor beschriebenen Abläufen.

**Patentansprüche**

1. Hydraulisches und/oder pneumatisches Bremssystem fur Kraftfahrzeuge, mit einem mehrere voneinander unabhängige Bremskreise (I, II) speisenden Hauptbremszylinder (4), einem mechanisch auf den Hauptbremszylinder (4) einwirkenden Bremskraftverstärker (6) und einem mittels einer elektronischen Auswerte- und Steuerschaltung (8) steuerbaren einzigen Druckmodulator, durch den der Bremsdruck mindestens zweier dieser Bremskreise (I, II) jeweils in Abhängigkeit von mittels Sensoren (3) erfaßten Drehgeschwindigkeits- und/oder Drehverzögerungswerten der Fahrzeugräder (1.1, 2.1; 1.2, 2.2) durch Drucksenken und Druckanheben regelbar ist, wobei in jedem dieser regelbaren Bremskreise (I, II) je eine durch die elektronische Auswerte- und Steuerschaltung (8) ein- und ausschaltbare Ventilvorrichtung (5.1, 5.1'; 5.2, 5.2') angeordnet ist, durch deren Betätigung je nach Regelerfordernis entweder mehrere oder nur einer der regelbaren Bremskreise (I, II) durch den Druckmodulator beaufschlagbar ist,

dadurch gekennzeichnet, daß Bremskraftverstärker und Druckmodulator zu einer integrierten Baueinheit in Form eines in seiner Wirkrichtung umschaltbaren Bremskraftverstärkers (6) zusammengefaßt sind,

daß der umschaltbare Bremskraftverstärker (6) durch die elektronische Auswerte- und Steuerschaltung (8) bei erfaßter Blockierneigung der Fahrzeugräder (1.1—2.2) je nach Regelerfordernis entweder — drucksenkend — in seine der Pedalkraft entgegenwirkende eine Wirkrichtung oder —

druckanhebend — in seine die Pedalkraft unterstützende andere Wirkrichtung umschaltbar ist,

und daß die Ventilvorrichtungen als reine Sperrventile (5.1, 5.2; 5.1', 5.2') ausgebildet sind.

2. Hydraulisches und/oder pneumatisches Bremssystem nach Anspruch 1, bei dem die Radbremsen (11, 12) derart bemessen sind, daß die Haftwertausnutzung an den Rädern (1.1, 2.1) der Vorderachse höher ist als an den Rädern (2.1, 2.2) der Hinterachse,

dadurch gekennzeichnet, daß in den Bremsleitungen zu den Hinterradbremsen (12) je ein an sich bekannter Bremsdruckminderer (13) mit einer definierten spürbaren Hysterese angeordnet ist.

3. Hydraulisches und/oder pneumatisches Bremssystem nach Anspruch 1 oder 2, dadurch gekennzeichnet, daß den Sperrventilien (5.1; 5.2) je ein Differenz-Druckschalter (10) parallelgeschaltet ist, der ein der elektronischen Auswerte- und Steuerschaltung (8) zuführbares Signal dann erzeugt, wenn der Druck vor dem Sperrventil (10) höher ist ais hinter denn Sperrventil.

4. Verfahren zum Betrieb eines hydraulischen und/oder pneumatischen Bremssystems nach einem der Ansprüche 1 bis 3, dadurch gekennzeichnet,

daß dann, wenn für beide Vorderräder (1.1, 2.1) und für kein anderes Rad Biokkiergefahr bzw. Biockieren signalisiert wird, die Sperrventile (5.1, 5.2; 5.1', 5.2') durch die elektronische Auswerte- und Steuerschaltung (8) derart ein- und/oder ausgeschaltet werden, daß die die Vorderräder (1.1, 2.1) enthaltenden Bremskreise durch den vom unnschaltbaren Bremskraftverstärker (6) modulierten Bremsdruck beaufschlagt werden, und zwar so lange, wie die Regelerfordernisse in diesen Bremskreisen gleichgerichtet sind,

und daß dann, wenn die Regelerfordernisse für diese Bremskreise infolge des Fortfalls der Blokkiergefahr für das eine der beiden Vorderräder einander entgegengerichtet werden, die Sperrventile (5.1, 5.2; 5.1', 5.2') durch die elektronische Auswerte- und Steuerschaltung (8) derart ein- und/oder ausgeschaltet werden, daß nur der das nicht blockiergefährdete Rad enthaltende Bremskreis durch den vom umschaltbaren Bremskraftverstärker (6) modulierten Bremsdruck beaufschlagt wird, nicht aber mehr der das weiterhin blockiergefährdete Rad enthaltende Bremskreis.

5. Verfahren zum Betrieb eines hydraulischen und/oder pneumatischen Bremssystems nach einem der Ansprüche 1 bis 3, mit zwei Diagonalbremkreisen, dadurch gekennzeichnet,

daß dann, wenn für beide Vorderräder (1.1; 2.1) und für nur eines der Hinterräder (1.2 bzw. 2.2) Blockiergefahr bzw. Blockleren signalisiert wird, die Sperrventile (5.1, 5.2; 5.1', 5.2') durch die elektronische Auswerte- und Steuerschaltung (8) derart ein- und/oder ausgeschaltet werden, daß beide Diagonalbremskreise entsprechend den Regelerfordernissen der Vorderräder durch den vom umschaltbaren Bremskraftverstärker (6) modulierten Bremsdruck beaufschlagt werden und zwar solange, wie diese Regelerfordernisse gleichgerichtet sind, und daß dann, wenn die Reglerfordernisse für die beiden Vorderräder (1.1, 2.1) infolge des Fortfalls der Blockiergefahr für das eine der beiden Vorderräder einander entgegengerichtet werden, die Sperrventile (5.1, 5.2; 5.1', 5.2') durch die elektronische Auswerte- und Steuerschaltung (8) derart ein- und/oder ausgeschaltet werden, daß nur der dieses Hinterrad enthaltende Diagonalbremskreis durch den vom umschaltbaren Bremskraftverstärker (6) modulierten Bremsdruck beaufschlagt wird, nicht aber mehr der andere Diagonalbremskreis.

**Revendications**

1. Système hydraulique et/ou pneumatique de freins pour automobiles, comprenant un maître-cylindre (4) de frein, qui alimente plusieurs circuits indépendants (I, II) de freinage, un servofrein (6), qui agit mécaniquement sur le maître-cylindre (4) de frein, ainsi qu'un dispositif unique modulateur de pression, qui peut être commandé à partir d'un dispositif électronique (8) d'analyse et de commande, et qui permet de soumettre la pression de freinage régnant dans au moins deux des circuits (I, II) de freinage à une régulation effectuée par une diminution ou par une augmentation de la pression, en fonction des valeurs de vitesse de rotation et/ou de décélération des roues (1.1, 2.1; 1.2, 2.2) du véhicule, lues au moyen des capteurs (3), chacun des circuits réglables (I, II) de freinage étant doté d'un dispositif (5.1, 5.1'; 5.2, 5.2') de coupure, qui peut être engagé ou désengagé par l'intermédiaire du dispositif électronique (8) d'analyse et de commande, et dont la mise en action entraîne l'alimentation, selon les besoins de régulation, soit de plusieurs, soit d'un seul des circuits réglables (I, II) de freinage, à partir du dispositif modulateur de la pression, caractérisé par le fait que le servofrein et le dispositif modulateur de pression constituent un ensemble intégral réalisé sous forme du servofrein (6) à effet réversible, que, lorsqu'un risque de blocage des roues (1.1 2.2) du véhicule est décelé, le servofrein réversible (6) peut être commuté, par l'intermédiaire du dispositif électronique (8) d'analyse et de commande et en fonction des besoins de régulation, soit de façon à produire un effet opposé à l'effort transmis par la pédale — diminuant la pression — soit de façon à produire un effet d'assistance de l'effort transmis par la pédale — augmentant la pression, et que les dispositifs de coupure sont réalisés sous forme de vannes de coupure (5.1, 5.2; 5.1', 5.2') simples.

2. Système hydraulique et/ou pneumatique de freins selon la revendication 1, dans lequel les freins (11, 12) des roues sont calculés de telle façon que le coefficient d'adhérence soit mis à profit dans une plus grande mesure sur les roues (1.1, 2.1) de l'essieu avant, que sur les roues (2.1, 2.2) de l'essieu arrière, caractérisé par le fait qu'un détendeur habituel (13) de pression de freinage, possédant une hystérésis notable prédéterminée, est disposé dans les conduites de frein alimentant les freins (12) des roues arrière.

3. Système hydraulique et/ou pneumatique de freins selon la revendication 1 ou 2, caractérisé par le fait qu'un manocontacteur (10) de pression différentielle est branché en parallèle avec chacune des vannes (5.1; 5.2) de coupure, et fournit un signal pouvant être transmis au dispositif électronique (8) d'analyse et de commande à chaque fois que la pression régnant en amont de la vanne (10) de coupure est supérieure à la pression régnant en aval de celle-ci.

4. Procédé pour faire fonctionner un système hydraulique et/ou pneumatique selon l'une des revendications 1 à 3, caractérisé par le fait que, lorsqu'un risque de blocage, voire un blocage des roues est signalé au niveau des deux roues avant (1.1, 2.1), à l'exception de toutes les autres roues, les vannes (5.1, 5.2; 5.1', 5.2') de coupure sont enclenchées et/ou désenclenchées, par l'intermédiaire du dispositif électronique (8) d'analyse et de commande, de telle sorte que les circuits de freinage auxquels sont reliées les roues avant (1.1, 2.1) reçoivent la pression de freinage modulée par le servofrein (6) à effet réversible, tant que les besoins de régulation des deux circuits sont du même ordre, et que, lorsque les besoins de régulation des deux circuits de freinage deviennent opposés, à la suite de la disparition du risque de blocage d'une des deux roues avant, les vannes de coupure (5.1, 5.2; 5.1', 5.2') sont enclenchées et/ou désenclenchées, par l'intermédiaire du dispositif électronique (8) d'analyse et de commande, de telle sorte que seul le circuit de freinage qui ne comporte pas la roue susceptible de bloquer reçoive la pression de freinage modulée par le servofrein (6) à effet réversible, et que le circuit de freinage qui comporte la roue restée susceptible de bloquer ne reçoive plus la pression modulée.

5. Procédé pour faire fonctionner un système hydraulique et/ou pneumatique de freins selon une des revendications 1 à 3, comportant deux circuits diagonaux de freinage, caractérisé par le fait que, lorsqu'un risque de blocage, voire le blocage des roues, est signalé pour les deux roues avant (1.1; 2.1) ainsi que pour une seule des roues arrière (1.2 ou 2.2), les vannes (5.1; 5.2; 5.1', 5.2') de coupure sont enclenchées et/ou désenclenchées, par l'intermédiaire du dispositif électronique (8) d'analyse et de commande, de telle sorte que les deux circuits diagonaux de freinage reçoivent la pression modulée par le servofrein (6) à effet réversible, en fonction des besoins de régulation des roues avant, tant que les besoins de régulation des deux roues sont du même ordre, et que, lorsque les besoins de régulation des deux roues avant (1.1, 2.1) deviennent opposés, à la suite de la disparition du risque de blocage d'une des deux roues avant, les vannes (5.1, 5.2; 5.1', 5.2') de coupure sont enclenchées et/ou désenclenchées, par l'intermédiaire du dispositif électronique (8) d'analyse et de commande, de telle sorte que seul le circuit diagonal de freinage, qui comporte la roue arrière concernée, reçoive la pression de freinage modulée par le servofrein (6) à effet réversible, alors que l'autre circuit diagonal de freinage ne la reçoit plus.

## Claims

1. A hydraulic and/or pneumatic brake system for motor vehicles, having a master brake cylinder (4) feeding a plurality of mutually independent brake circuits (I,II), a brake force booster (6) acting mechanically upon the master brake cylinder (4), and a single pressure modulator which is controllable by means of an electronic evaluation and control circuit (8) and by which the brake pressure of at least two of these brake circuits (I,II) is controllable at any one time by reduction of pressure and increase in pressure in dependence upon rotational speed values and rotational deceleration values of the vehicle wheels (1.1, 2.1; 1.2, 2.2) detected by means of sensors (3), there being provided in each of these controllable brake circuits (I, II) a respective valve device (5.1, 5.1'; 5.2, 5.2') which is switchable on and off by the electronic evaluation and control circuit (8), and, in accordance with the control requirement, either a plurality or only one of the controllable brake circuits (I, II) may be acted upon by the pressure modulator by actuation of the said valve device, characterised in that the brake force booster and the pressure modulator are combined to form an integrated structural unit in the form of brake force booster (6) whose operative direction is reversible, that, when a tendency of the vehicle wheels (1.1 — 2.2) to lock is detected, the reversible brake force booster (6) is reversible by the electronic evaluation and control circuit (8) either into its operative direction opposing the pedal force to reduce pressure or into its other operative direction assisting the pedal force to increase pressure, in accordance with the control requirement, and that the valve devices are in the form of pure non-return valves (5.1, 5.2; 5.1', 5.2').

2. A hydraulic and/or pneumatic brake system as claimed in claim 1, in which the wheel brakes (11, 12) are dimensioned in such a way that the utilization of the coefficient of adhesion at the wheels (1.1, 2.1) of the front axle is greater than that at the wheels (2.1, 2.2) of the rear axle, characterised in that a respective brake pressure reducer (13) known per se and having a defined, perceptible hysteresis is disposed in each of the brake lines leading to the rear wheel brakes (12).

3. A hydraulic and/or pneumatic brake system as claimed in claim 1 or 2, characterised in that a respective differential pressure switch (10) is connected in parallel with each of the non-return valves (5.1; 5.2) and, when the pressure upstream of the non-return valve (10) is higher than that downstream of the non-return valve, generates a signal feedable to the electronic evaluation and control circuit (8).

4. A method of operating a hydraulic and/or pneumatic brake system as claimed in one of the claims 1 to 3, characterised in that, when the risk of locking, or locking, is signalled for the two front wheels (1.1, 2.1) and for no other wheel, the non-return valves (5.1, 5.2; 5.1', 5.2') are switched on and/or off by the electronic evaluation and control circuit (8) in such a way that the brake circuits containing the front wheels (1.1, 2.1) are acted upon by the brake pressure modulated by the reversible brake force booster (6) and for as long as the control requirements in these brake circuits are not opposed to one another, and that, when the control requirements for these brake circuits are opposed to one another as a result of the cessation of the risk of locking for one of the two front wheels, the non-return valves (5.1, 5.2; 5.1', 5.2') are switched on and/or off by the electronic evaluation and control circuit (8) in such a way that only the brake circuit containing the wheel not subjected to the risk of locking is acted upon by the brake pressure modulated by the reversible brake force booster (6), but no longer the brake circuit containing the wheel continuing to be subjected to the risk of locking.

5. A method of operating a hydraulic and/or penumatic brake system as claimed in one of the claims 1 to 3, having two diagonal brake circuits, characterised in that, when the risk of locking, or locking, is signalled for the two front wheels (1.1, 2.1) and for only one of the rear wheels (1.2 or 2.2), the non-return valves (5.1, 5.2; 5.1', 5.2') are switched on and/or off by the electronic evaluation and control circuit (8) in such a way that the two diagonal brake circuits are acted upon by the brake pressure, modulated by the reversible brake force booster (6), in accordance with the control requirements, and for as long as these control requirements are not opposed to one another, and that, when the control requirements for the two front wheels (1.1, 2.1) are opposed to one another as a result of the cessation of the risk of locking for the one of the two front wheels, the non-return valves (5.1, 5.2; 5.1', 5.2') are switched on and/or off by the electronic evaluation and control circuit (8) in such a way that only the diagonal brake circuit containing this rear wheel is acted upon by the brake pressure modulated by the reversible brake force booster (6), and no longer the other diagonal brake circuit.

Fig.1

EP 0 130 501 B1

Fig.2

Fig.3

3

Fig. 4

Fig.5